# EUROPÄISCHE PATENTSCHRIFT

(11) **EP 3 083 331 B1**
(45) Veröffentlichungstag und Bekanntmachung des Hinweises auf die Patenterteilung: **12.04.2023**
(21) Anmeldenummer: 14811774.0
(22) Anmeldetag: 10.12.2014
(51) Int. Cl.: B60Q 1/14, B60Q 11/00, F21S 41/663

(54) **SCHEINWERFER FÜR EIN KRAFTFAHRZEUG SOWIE DAZUGEHÖRIGES VERFAHREN**
HEADLIGHT FOR A MOTOR VEHICLE, AND CORRESPONDING METHOD
PHARE POUR UN VÉHICULE AUTOMOBILE AINSI QUE PROCÉDÉ CORRESPONDANT

(30) Priorität: 20.12.2013 DE 102013021868
(43) Veröffentlichungstag der Anmeldung: 26.10.2016
(73) Patentinhaber: Audi AG, 85045 Ingolstadt (DE)
(72) Erfinder: FUNK, Christian, 92339 Beilngries (DE); BARMEYER, Florenz, 02763 Zittau (DE)
(74) Vertreter: Hofstetter, Schurack & Partner
(86) Internationale Anmeldenummer: PCT/EP2014/003299
(87) Internationale Veröffentlichungsnummer: WO 2015/090536

(56) Entgegenhaltungen:
- EP-A2- 2 280 215
- EP-A2- 2 548 768
- WO-A1-2006/111133
- DE-A1-102004 036 174
- DE-A1-102006 021 694
- DE-A1-102007 040 042
- DE-A1-102008 060 947
- DE-A1-102008 062 640

## Beschreibung

Die vorliegende Erfindung betrifft einen Scheinwerfer für ein Kraftfahrzeug mit einer Mehrzahl von Leuchtelementen, die entlang einer Erstreckungsrichtung des Scheinwerfers nebeneinander angeordnet sind, und einer Steuereinrichtung zum Ansteuern der Mehrzahl von Leuchtelementen zum Bereitstellen zumindest einer Lichtverteilung mit dem Scheinwerfer. Überdies betrifft die vorliegende Erfindung ein Kraftfahrzeug mit einem solchen Scheinwerfer. Schließlich betrifft die vorliegende Erfindung ein Verfahren zum Betreiben eines Scheinwerfers eines Kraftfahrzeugs.

Bisher existiert bei Kraftfahrzeugen im Straßenverkehr zur Beleuchtung der Fahrbahn nur eine Lichtverteilung. Diese ist asymmetrisch ausgeführt, beispielsweise bei Rechtsverkehr auf der linken Hälfte um 1 % Prozent vertikal beschnitten, und stellt einen Kompromiss für unterschiedliche Straßenklassen dar. Eine Erweiterung dieser Lichtverteilung stellt das Fernlicht da, welche die Beleuchtung über den Abblendlichtbereich hinaus darstellt. Die Ausrichtung dieser Lichtverteilung kann nur dann aktiviert werden, wenn sich kein anderer Verkehrsteilnehmer im Bereich des Scheinwerfers befindet. Neuartige adaptive Fernlichtsysteme beheben diesen Nachteil, indem sie pro horizontalen Winkelbereich bestimmte Leuchtdioden aufweisen, die nur diesen Winkelbereich ausleuchten. Befindet sich ein anderer Verkehrsteilnehmer in diesem Bereich, werden die Leuchtdioden ausgeschaltet, wodurch der Verkehrsteilnehmer nicht mehr geblendet wird.

Derartige Scheinwerfer umfassen eine Mehrzahl von Leuchtelemente, wobei jedes dieser Leuchtelemente beziehungsweise -segmente mehrere Leuchtdioden umfassen kann. Dabei können die einzelnen Leuchtelemente separat mit elektrischer Energie versorgt werden, um die Leuchtdioden zu aktivieren. Mit derartigen Scheinwerfern wird üblicherweise eine sehr breite Lichtverteilung, die sich beispielsweise in einem Winkelbereich von +/- 20 Grad um eine Hauptabstrahlrichtung des Scheinwerfers erstrecken kann, bereitgestellt.

Eine solche Lichtverteilung kann zu störenden Inhomogenitäten führen. Weiterhin ist die Wahrnehmung der Lichtverteilung sehr auffällig und die Hell-Dunkel-Grenzen an den Rändern sind ausgeprägt.

In diesem Zusammenhang beschreibt die DE 10 2007 050 374 A1 einen Fahrzeugscheinwerfer für ein Kraftfahrzeug, der mindestens ein Leuchtdiodenfeld als Lichtquelle und eine optische Abbildungsvorrichtung mit mindestens einer Freiformfläche zur optischen Abbildung des von dem Leuchtdiodenfeld erzeugten Lichtes aufweist. Dabei sind die Leuchtdioden einzeln ansteuerbar und in einer Steuereinheit wird eine Anzahl von Leuchtmustern für das Diodenfeld gespeichert. Diese Leuchtmuster und die Freiformfläche werden vorab in Abhängigkeit voneinander bestimmt, so dass jedes Leuchtmuster einer vorgebbaren Ausleuchtcharakteristik des Fahrzeugscheinwerfers entspricht.

Darüber hinaus beschreibt die WO 2007/025931 A1 einen Scheinwerfer für Fahrzeuge mit einer Mehrzahl von LED-Lichtquellen, die in einer gemeinsamen lichtabstrahlenden Fläche zusammengefasst sind. Dabei sind die LED-Lichtquellen einer Optikeinheit zugeordnet. Die LED-Lichtquellen können einzeln eingeschaltet, ausgeschaltet und/oder gedimmt werden, um unterschiedliche Lichtverteilungen zu erzeugen.

Aus der WO 2011/154470 A1 ist eine Vorsatzoptik zum Bündeln von Licht mindestens einer der Vorsatzoptik zugeordneten Lichtquelle bekannt. Die Lichtquelle kann mehrere Leuchtdioden umfassen, die einzeln ansteuerbar sind. Dadurch kann entlang der horizontalen und vertikalen Erstreckung eine unterschiedliche Lichtverteilung bereitgestellt werden.

Darüber hinaus beschreibt die WO 2007/147512 A1 ein Betriebsgerät für Leuchtmittel, welches eine Schnittstelle aufweist, über die dem Betriebsgerät externe Dimmwerte zuführbar sind. Das Betriebsgerät setzt diese zugeführten externen Dimmwerte in interne Dimmwerte um, auf deren Grundlage die Ansteuerung der angeschlossenen Leuchtmittel erfolgt.

Die EP 2 548 768 A2 beschreibt einen Scheinwerfer für ein Kraftfahrzeug mit einer Mehrzahl von Leuchtmitteln, wobei für jedes der Leuchtmittel jeweils ein Wert der Leuchtdichte individuell einstellbar ist und der Wert der Leuchtdichte des jeweiligen Leuchtmittels in Abhängigkeit von einer Position des Leuchtmittels entlang einer ersten Erstreckungsrichtung und/oder einer zweiten Erstreckungsrichtung mindestens einer vorgegebenen Verteilungsfunktion folgend einstellbar ist.

In der EP 2 280 215 A2 ist ein LED-Kraftfahrzeugscheinwerfer zur Erzeugung einer dynamischen Lichtverteilung beschrieben. Dabei umfasst der Scheinwerfer LED-Lichtquellen, wobei die einzelnen LED-Lichtquellen getrennt voneinander ansteuerbar sind. Somit können unterschiedliche Lichtverteilungen bereitgestellt werden, um beispielsweise eine Blendung des Gegenverkehrs zu vermeiden.

Darüber hinaus beschreibt die DE 10 2006 021 694 A1 eine Beleuchtungseinrichtung für ein Kraftfahrzeug, welche eine Steuerungseinrichtung aufweist, mit der separate Module, die jeweils mehrere LEDs umfassen, angesteuert werden können. Auf diese Weise kann ein Abblendlicht und/oder ein Fernlicht bereitgestellt werden.

Die DE 10 2008 062 640 A1 offenbart einen Fahrzeugscheinwerfer mit einer Mehrzahl von LED-Lichtquellen, die in einer gemeinsamen Licht abstrahlenden Lichtquellenmatrix zusammengefasst sind, wobei die einzelnen LED-Lichtquellen einschaltbar und/oder ausschaltbar und/oder dimmbar ausgeführt sind, um eine Lichtverteilung der Licht abstrahlenden Lichtquellenmatrix zu verändern.

Außerdem offenbart die DE 10 2007 040 042 A1 ein System zum Erzeugen eines Lichtbündels im Vorfeld eines Kraftfahrzeugs. Das System umfasst einen Scheinwerfer, der mindestens ein LED-Array aus mehreren, separat elektrisch ansteuerbaren Leuchtdioden umfasst. Hierbei wird ein Dimmen der LEDs in Abhängigkeit von einem detektierten Objekt vorgenommen. Dabei ist vorgesehen, dass das Ausmaß der Dimmung in zwei Stufen bestimmt wird, wobei - in einer ersten Stufe für jede dieser LEDs bestimmt wird, um welchen Wert diese gedimmt werden muss, damit das Maximum ihres Beitrags im blendungskritischen Horizontalwinkelbereich unterhalb des Beleuchtungsstärkegrenzwertes liegt. In einer zweiten Stufe wird anhand eines vorbestimmten Überlappungskorrekturwertes festgelegt, um wieviel die LEDs über den in der ersten Stufe bestimmten Wert hinaus gedimmt werden, wobei der Überlappungskorrekturwert unter Berücksichtigung der horizontalwinkelmäßigen Überlappung der LED-Beiträge zur Beleuchtungsstärke-Verteilung bestimmt wurde.

Es ist Aufgabe der vorliegenden Erfindung, einen Scheinwerfer für ein Kraftfahrzeug zuverlässiger und sicherer zu betreiben.

Diese Aufgabe wird durch einen Scheinwerfer mit den Merkmalen des Patentanspruchs 1 und ein Verfahren mit den Merkmalen des Patentanspruchs 4 gelöst. Vorteilhafte Weiterbildungen der vorliegenden Erfindung sind Gegenstand der abhängigen Ansprüche.

Der erfindungsgemäße Scheinwerfer für ein Kraftfahrzeug umfasst eine Mehrzahl von Leuchtelementen, die entlang einer Erstreckungsrichtung des Scheinwerfers nebeneinander angeordnet sind, und eine Steuereinrichtung zum Ansteuern der Mehrzahl von Leuchtelementen zum Bereitstellen zumindest einer Lichtverteilung mit dem Scheinwerfer, wobei in der Steuereinrichtung für jedes der Leuchtelemente in Abhängigkeit von der Position des Leuchtelements entlang der Erstreckungsrichtung des Scheinwerfers unabhängig von der zumindest einen Lichtverteilung ein Maximalwert für eine Betriebsgröße gespeichert ist, mit der das Leuchtelement beim Bereitstellen der zumindest einen Lichtverteilung höchstens betreibbar ist, wobei für unterschiedliche Lichtverteilungen, die mit den einzelnen Leuchtelementen bereitgestellt werden, der jeweilige Maximalwert nicht überschritten wird, wobei durch die Ansteuerung der Leuchtelemente als die unterschiedlichen Lichtverteilungen verschiedene Fernlichtverteilungen bereitgestellt werden, wobei durch die Betriebsgröße eine Beleuchtungsstärke des jeweiligen Leuchtelements einstellbar ist und wobei die Maximalwerte für die Betriebsgröße der Leuchtelemente in einem einer Hauptabstrahlrichtung des Scheinwerfers zugeordneten Bereich höher sind als in einem Randbereich des Scheinwerfers.

Der Scheinwerfer umfasst eine Mehrzahl von Leuchtelementen beziehungsweise -segmenten, die nebeneinander angeordnet sind. Dabei kann die Mehrzahl von Leuchtelementen entlang einer horizontalen, einer vertikalen und/oder einer schräg dazu verlaufenden Erstreckungsrichtung des Scheinwerfers angeordnet sein. Die horizontale Erstreckungsrichtung kann insbesondere im bestimmungsgemäßen Einbauzustand des Scheinwerfers einer Fahrzeugquerachse entsprechen. Vorliegend ist für jedes der Lichtelemente eine maximale Betriebsgröße vorgegeben, mit der das jeweilige Leuchtelement angesteuert werden darf. Auch für unterschiedliche Lichtverteilungen, die mit den einzelnen Leuchtelementen bereitgestellt werden können, darf der jeweilige Wert nicht überschritten werden. Somit werden unterschiedliche Lichtverteilungen mit dem Scheinwerfer ermöglicht, wobei sichergestellt werden kann, dass die jeweiligen Leuchtelemente vorbestimmte Beleuchtungsstärken nicht überschreiten. Somit kann beispielsweise zuverlässig verhindert werden, dass der Gegenverkehr geblendet wird. Überdies kann eine homogene Lichtverteilung bereitgestellt werden. Darüber hinaus können ausgeprägte Hell-Dunkel-Grenzen innerhalb der Lichtverteilung vermieden werden.

Zudem sind die Maximalwerte für die Betriebsgröße der Leuchtelemente in einem der Hauptabstrahlrichtung des Scheinwerfers zugeordneten Bereich höher als in einem Randbereich des Scheinwerfers. Für die Leuchtelemente die entlang der Erstreckungsrichtung des Scheinwerfers in einem mittleren Bereich angeordnet sind, kann eine maximale Beleuchtungsstärke vorgegeben werden. Für die Leuchtelemente, die den Randbereichen zugeordnet sind, kann eine geringere Beleuchtungsstärke als für die Leuchtelemente im mittleren Bereich vorgegeben werden. Somit ergibt sich eine homogene Lichtverteilung und die Hell-Dunkel-Grenzen sind geringer ausgebildet.

Die Betriebsgröße ist eine elektrische Stromstärke, die durch das jeweilige Leuchtelement fließt. Üblicherweise werden die Leuchtelemente mittels Pulsweitenmodulation betrieben. Hierzu kann beispielsweise ein entsprechender Tastgrad der Pulsweitenmodulation für jedes der Leuchtelemente vorgegeben werden. Mit anderen Worten wird entlang der Erstreckungsrichtung des Scheinwerfers für die einzelnen Leuchtelemente eine entsprechend Dimmkennlinie vorgegeben, die entsprechende Maximalwerte aufweist. Die einzelnen Leuchtelemente dürfen nicht über diesen Maximalwert hinaus bestromt werden.

Zudem folgen die Maximalwerte entlang der Erstreckungsrichtung des Scheinwerfers einer vorbestimmten Verteilung. Eine derartige Verteilung kann beispielsweise monoton steigend und/oder stetig vorgegeben sein. AIternativ dazu kann eine unstetige Verteilung vorgegeben sein. Dabei ist die Verteilung frei einstellbar beziehungsweise parametrierbar. Somit können die Maximalwerte in Abhängigkeit von der Art oder Baureihe des Scheinwerfers entsprechend angepasst werden.

Jedes der Leuchtelemente umfasst eine Mehrzahl von Leuchtdioden, die individuell oder gemeinsam mit der Steuereinrichtung ansteuerbar sind. Leuchtdioden zeichnen sich durch eine lange Lebensdauer aus. Zudem können die einzelnen Leuchtdioden flexibel in dem Scheinwerfer angeordnet werden.

Das erfindungsgemäße Kraftfahrzeug umfasst den erfindungsgemäßen Scheinwerfer. Insbesondere umfasst das Kraftfahrzeug zwei solcher Scheinwerfer.

Bevorzugt umfasst das Kraftfahrzeug einen Umfeldsensor und die Steuereinrichtung passt die zumindest eine Lichtverteilung an, falls der Umfeldsensor ein Objekt im Umfeld des Kraftfahrzeugs erfasst. Falls ein entgegenkommender Verkehrsteilnehmer erkannt wird, kann die Lichtverteilung entsprechend angepasst werden. Dabei wird die Lichtverteilung derart angepasst, dass die einzelnen Leuchtelemente maximal mit dem Maximalwert für die Betriebsgröße betrieben werden. Somit kann ein zuverlässiger Betrieb des Kraftfahrzeugs ermöglicht werden.

Das erfindungsgemäße Verfahren zum Betreiben eines Scheinwerfers für ein Kraftfahrzeug, wobei der Scheinwerfer eine Mehrzahl von Leuchtelemente, die entlang einer Erstreckungsrichtung des Scheinwerfers nebeneinander angeordnet sind, umfasst, beinhaltet das Ansteuern der Mehrzahl von Leuchtelementen zum Bereitstellen zumindest einer Lichtverteilung mit dem Scheinwerfer und das Vorgeben eines Maximalwerts für eine Betriebsgröße für jedes der Leuchtelemente in Abhängigkeit von der Position des Leuchtelements entlang der Erstreckungsrichtung des Scheinwerfers und unabhängig von der zumindest einen Lichtverteilung wobei für unterschiedliche Lichtverteilungen, die mit den einzelnen Leuchtelementen bereitgestellt werden, der jeweilige Maximalwert nicht überschritten wird, wobei durch die Ansteuerung der Leuchtelemente als die unterschiedlichen Lichtverteilungen verschiedene Fernlichtverteilungen bereitgestellt werden und wobei jedes der Leuchtelemente beim Bereitstellen der zumindest einen Lichtverteilung höchstens mit dem Maximalwert für die Betriebsgröße betrieben wird wobei die Maximalwerte für die Betriebsgröße der Leuchtelemente in einem einer Hauptabstrahlrichtung des Scheinwerfers zugeordneten Bereich höher sind als in einem Randbereich des Scheinwerfers.

Die zuvor im Zusammenhang mit dem erfindungsgemäßen Scheinwerfer beschriebenen Vorteile und Weiterbildungen gelten sinngemäß für das erfindungsgemäße Kraftfahrzeug und das erfindungsgemäße Verfahren.

Die vorliegende Erfindung wird nun anhand der beigefügten Zeichnungen näher erläutert. Dabei zeigen:
- Fig. 1: einen Scheinwerfer für ein Kraftfahrzeug, der eine Mehrzahl von Leuchtelementen umfasst;
- Fig. 2: eine Verteilung der Maximalwerte für eine Betriebsgröße der einzelnen Leuchtelemente in einer ersten Ausführungsform; und
- Fig. 3: eine Verteilung gemäß Fig. 2 für eine weitere Ausführungsform.

Die nachfolgend näher geschilderten Ausführungsbeispiele stellen bevorzugte Ausführungsformen der vorliegenden Erfindung dar.

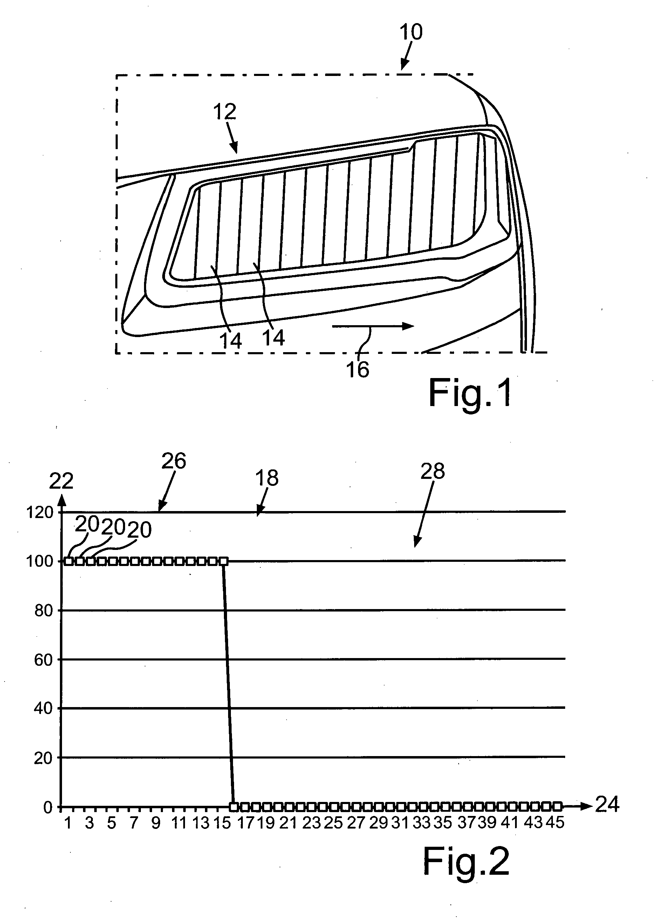

Fig. 1 zeigt in einer ausschnittsweisen Darstellung einen Scheinwerfer 12 eines Kraftfahrzeugs 10. Der Scheinwerfer 12 umfasst eine Mehrzahl von Leuchtelementen 14, die entlang einer Erstreckungsrichtung 16 des Scheinwerfers 12 nebeneinander angeordnet sind. Im vorliegenden Ausführungsbeispiel sind die Leuchtelemente 14 entlang der horizontalen Erstreckungsrichtung nebeneinander angeordnet. Bevorzugt umfasst jedes der Leuchtelemente 14 eine Mehrzahl von Leuchtdioden. Die Leuchtelemente 14 sind jeweils mit einer Steuereinrichtung verbunden, mit der die Leuchtelemente 14 beziehungsweise die einzelnen Leuchtdioden der Leuchtelemente 14 angesteuert werden können. Die Leuchtelemente 14 können mit der Steuereinrichtung eingeschaltet und ausgeschaltet werden. Zudem können die Leuchtelemente 14 mit der Steuereinrichtung gedimmt werden. Üblicherweise werden die Leuchtelemente 14 mittels einer pulsweitenmodulierten Stromstärke betrieben. Durch Anpassung des Tastgrads der Pulsweitenmodulation können die Leuchtelemente 14 gedimmt werden.

Vorliegend wird für jedes der Leuchtelemente 14 in der Steuereinrichtung ein Maximalwert für eine Betriebsgröße hinterlegt. Mit der Betriebsgröße kann die Beleuchtungsstärke des jeweiligen Leuchtelements 14 eingestellt werden. Insbesondere ist die Betriebsgröße die elektrische Stromstärke, die durch das jeweilige Leuchtelement 14 fließt. Mit dem Scheinwerfer 12 können durch entsprechende Ansteuerung der Leuchtelemente 14 verschiedene Lichtverteilungen bereitgestellt werden. Beispielsweise können verschiedene Fernlichtverteilungen bereitgestellt werden. Ebenso ist es denkbar, dass durch Ansteuerung der einzelnen Leuchtelemente 14 ein Abblendlicht, ein Stadtlicht, ein Landstraßenlicht, ein Autobahnlicht oder dergleichen bereitgestellt wird. Vorliegend wird für jede der Leuchtelemente ein Maximalwert beziehungsweise ein maximaler Dimmwert vorgegeben, mit dem das jeweilige Leuchtelement 14 maximal betrieben werden kann. Somit kann unabhängig von der jeweiligen Lichtverteilung der Maximalwert nicht überschritten werden.

Fig. 2 zeigt ein Diagramm 18, in dem die Maximalwerte 20 für die Betriebsgröße 22 in Abhängigkeit von der Position 24 aufgetragen sind. Im vorliegenden Ausführungsbeispiel stellt die auf der Abszisse dargestellte Zahl die Nummer des jeweiligen Leuchtelements 14 dar. Das Diagramm 18 weist einen ersten Bereich 26 und einen zweiten Bereich 28 auf. Dabei ist der erste Bereich 26 dem linken Scheinwerfer 12 des Kraftfahrzeugs 10 zugeordnet. Dieser wird nachfolgend näher beschrieben.

Bei dem Diagramm 18 gemäß Fig. 2 werden alle Leuchtelemente 14 mit einem Maximalwert 20 für die Betriebsgröße 22 von 100 betrieben. Dieser Wert entspricht einem Dimmwert für das jeweilige Leuchtelement 14. Das heißt alle Leuchtelemente 14 werden mit der maximalen Beleuchtungsstärke betrieben. Bei einer derartigen Lichtverteilung ergibt sich eine deutliche Hell-Dunkel-Grenze an den Rändern des Scheinwerfers. Zudem empfindet der Fahrzeugführer eine derartige Lichtverteilung als inhomogen.

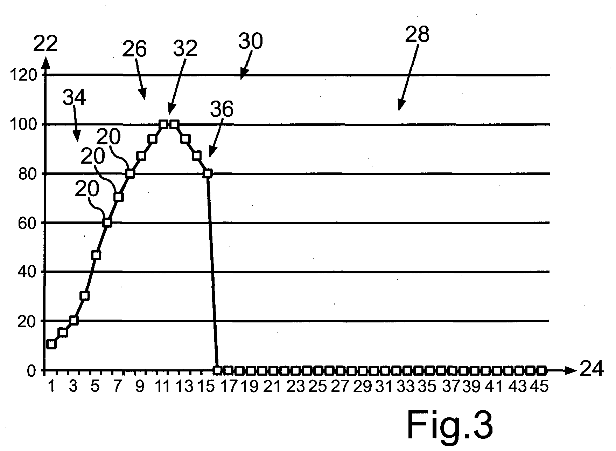

Fig. 3 zeigt ein weiteres Diagramm 30, in der die Maximalwerte 20 für die Betriebsgröße 22 entsprechend angepasst sind. Hierbei werden die Leuchtelemente 14, die einem mittleren Bereich 32 des Scheinwerfers 12 zugeordnet sind weiterhin mit der maximalen Beleuchtungsstärke betrieben. Die Leuchtelemente 14, die dem ersten Randbereich 34 und dem zweiten Randbereich 36 zugeordnet sind, weisen geringere Maximalwerte 20 auf. Somit ergibt sich insbesondere in den Randbereichen des Scheinwerfers 12 eine geringer ausgeprägte Hell-Dunkel-Grenze. Überdies wird eine homogene Lichtverteilung bereitgestellt.

## Patentansprüche

1. Scheinwerfer (12) für ein Kraftfahrzeug (10) mit
- einer Mehrzahl von Leuchtelementen (14), die entlang einer Erstreckungsrichtung (16) des Scheinwerfers (12) nebeneinander angeordnet sind, und
- einer Steuereinrichtung zum Ansteuern der Mehrzahl von Leuchtelementen (14) zum Bereitstellen zumindest einer Lichtverteilung mit dem Scheinwerfer (12), wobei jedes der Leuchtelemente (14) eine Mehrzahl von Leuchtdioden umfasst, die individuell oder gemeinsam mit der Steuereinrichtung ansteuerbar sind, wobei
- durch die Ansteuerung der Leuchtelemente (14) als die unterschiedlichen Lichtverteilungen verschiedene Fernlichtverteilungen bereitgestellt werden,
**dadurch gekennzeichnet, dass**
- in der Steuereinrichtung für jedes der Leuchtelemente (14) in Abhängigkeit von der Position des Leuchtelements (14) entlang der Erstreckungsrichtung (16) des Scheinwerfers (12) unabhängig von der zumindest einen Lichtverteilung ein Maximalwert (20) für eine Betriebsgröße (22) gespeichert ist, mit der das Leuchtelement (14) beim Bereitstellen der zumindest einen Lichtverteilung höchstens betreibbar ist, wobei für unterschiedliche Lichtverteilungen, die mit den einzelnen Leuchtelementen (14) bereitgestellt werden, der jeweilige Maximalwert (20) nicht überschritten wird, wobei
- durch die Betriebsgröße (22) eine Beleuchtungsstärke des jeweiligen Leuchtelements (14) einstellbar ist, wobei die Betriebsgröße (22) eine elektrische Stromstärke ist, die durch das jeweilige Leuchtelement (14) fließt, wobei
- die Maximalwerte (20) für die Betriebsgröße (22) der Leuchtelemente (14) in einem einer Hauptabstrahlrichtung des Scheinwerfers (12) zugeordneten Bereich höher sind als in einem Randbereich (34) des Scheinwerfers (12),
- die Maximalwerte (20) entlang der Erstreckungsrichtung (16) des Scheinwerfers (12) einer vorbestimmten Verteilung folgen, wobei die Verteilung einstellbar ist.

2. Kraftfahrzeug (10) mit einem Scheinwerfer (12) nach einem der vorhergehenden Ansprüche.

3. Kraftfahrzeug (10) nach Anspruch 2,
**dadurch gekennzeichnet, dass**
das Kraftfahrzeug (10) einen Umfeldsensor umfasst und die Steuereinrichtung die zumindest eine Lichtverteilung anpasst, falls der Umfeldsensor ein Objekt im Umfeld des Kraftfahrzeugs (10) erfasst.

4. Verfahren zum Betreiben eines Scheinwerfers (12) für ein Kraftfahrzeug (10), wobei der Scheinwerfer (12) eine Mehrzahl von Leuchtelementen (14), die entlang einer Erstreckungsrichtung (16) des Scheinwerfers (12) nebeneinander angeordnet sind, umfasst, durch und
- Ansteuern der Mehrzahl von Leuchtelementen (14) zum Bereitstellen zumindest einer Lichtverteilung mit dem Scheinwerfer (12), wobei jedes der Leuchtelemente (14) eine Mehrzahl von Leuchtdioden umfasst, die individuell oder gemeinsam mit der Steuereinrichtung ansteuerbar sind,
- wobei durch die Ansteuerung der Leuchtelemente (14) als die unterschiedlichen Lichtverteilungen verschiedene Fernlichtverteilungen bereitgestellt werden,
**gekennzeichnet durch**
- Vorgeben eines Maximalwerts (20) für eine Betriebsgröße (22) für jedes der Leuchtelemente (14) in Abhängigkeit von der Position des Leuchtelements (14) entlang der Erstreckungsrichtung (16) des Scheinwerfers (12) und unabhängig von der zumindest einen Lichtverteilung, wobei die Betriebsgröße (22) eine elektrische Stromstärke ist, die durch das jeweilige Leuchtelement (14) fließt, wobei für unterschiedliche Lichtverteilungen, die mit den einzelnen Leuchtelementen (14) bereitgestellt werden, der jeweilige Maximalwert (20) nicht überschritten wird, wobei
- jedes der Leuchtelemente (14) beim Bereitstellen der zumindest einen Lichtverteilung höchstens mit den Maximalwert (20) für die Betriebsgröße (22) betrieben wird, wobei die Maximalwerte (20) für die Betriebsgröße (22) der Leuchtelemente (14) in einem einer Hauptabstrahlrichtung des Scheinwerfers (12) zugeordneten Bereich höher sind als in einem Randbereich (34) des Scheinwerfers (12) und wobei
- die Maximalwerte (20) entlang der Erstreckungsrichtung (16) des Scheinwerfers (12) einer vorbestimmten Verteilung folgen, wobei die Verteilung eingestellt wird.

## Claims

1. A headlamp (12) for a motor vehicle (10) comprising
- a plurality of lighting elements (14), which are arranged next to each other along an extension direction (16) of the headlamp (12), and
- a control device for controlling the plurality of lighting elements (14) for providing at least one light distribution with the headlamp (12), wherein each of the lighting elements (14) includes a plurality of light emitting diodes, which are individually or collectively controllable with the control device, wherein various high beam distributions are provided as the different light distributions by the control of the lighting elements (14),
**characterized in that**
- a maximum value (20) for an operating parameter (22), with which the lighting element (14) is at most operable in providing the at least one light distribution, is stored in the control device for each of the lighting elements (14) depending on the position of the lighting element (14) along the extension direction (16) of the headlamp (12) independently of the at least one light distribution, wherein the respective maximum value (20) is not exceeded for different light distributions, which are provided by the individual lighting elements (14), wherein
- an illuminance of the respective lighting element (14) is adjustable by the operating parameter (22), wherein the operating parameter (22) is an electrical current intensity, which flows through the respective lighting element (14), wherein
- the maximum values (20) for the operating parameter (22) of the lighting elements (14) are higher in an area associated with a principal radiation direction of the headlamp (12) than in an edge area (34) of the headlamp (12),
- the maximum values (20) comply with a predetermined distribution along the extension direction (16) of the headlamp (12), wherein the distribution is adjustable.

2. A motor vehicle (10) with a headlamp (12) according to any one of the preceding claims.

3. The motor vehicle (10) according to claim 2,
**characterized in that**
the motor vehicle (10) includes an environmental sensor and the control device adapts the at least one light distribution if the environmental sensor captures an object in the environment of the motor vehicle (10).

4. A method for operating a headlamp (12) for a motor vehicle (10), wherein the headlamp (12) includes a plurality of lighting elements (14), which are arranged next to each other along an extension direction (16) of the headlamp (12), and by
- controlling the plurality of lighting elements (14) for providing at least one light distribution with the headlamp (12), wherein each of the lighting elements (14) includes a plurality of light emitting diodes, which are individually or collectively controllable with the control device,
- wherein various high beam distributions are provided as the different light distributions by the control of the lighting elements (14),
**characterized by**
- presetting a maximum value (20) for an operating parameter (22) for each of the lighting elements (14) depending on the position of the lighting element (14) along the extension direction (16) of the headlamp (12) and independently of the at least one light distribution, wherein the operating parameter (22) is an electrical current intensity, which flows through the respective lighting element (14), wherein the respective maximum value (20) is not exceeded for different light distributions, which are provided by the individual lighting elements (14), wherein
- each of the lighting elements (14) is operated at most with the maximum value (20) for the operating parameter (22) in providing the at least one light distribution, wherein the maximum values (20) for the operating parameter (22) of the lighting elements (14) are higher in an area associated with a principal radiation direction of the headlamp (12) than in an edge area (34) of the headlamp (12), and wherein
- the maximum values (20) comply with a predetermined distribution along the extension direction (16) of the headlamp (12), wherein the distribution is adjusted.

## Revendications

1. Phare (12) pour un véhicule à moteur (10), comportant :
- une pluralité d'éléments lumineux (14) qui sont disposés les uns à côté des autres le long d'une direction d'extension (16) du phare (12), et
- un dispositif de commande pour commander la pluralité d'éléments lumineux (14) afin de produire au moins une distribution de lumière avec le phare (12), chacun des éléments lumineux (14) incluant une pluralité de diodes électroluminescentes qui peuvent être commandées avec le dispositif de commande de manière individuelle ou collective,
- différentes distributions de lumière de feux de route étant produites par la commande des éléments lumineux (14) sous la forme des différentes distributions de lumière,
**caractérisé en ce que**
- une valeur maximale (20) d'une grandeur de fonctionnement (22) est mémorisée dans le dispositif de commande pour chacun des éléments lumineux (14), en fonction de la position de l'élément lumineux (14) le long de la direction d'extension (16) du phare (12), indépendamment de la au moins une distribution de lumière, valeur maximale à laquelle l'élément lumineux (14) peut fonctionner au maximum en produisant la au moins une distribution de lumière, la valeur maximale (20) respective n'étant pas dépassée pour différentes distributions de lumière qui sont produites avec les éléments lumineux (14) individuels,
- une intensité d'éclairage de l'élément lumineux (14) respectif pouvant être réglée au moyen de la grandeur de fonctionnement (22), laquelle grandeur de fonctionnement (22) étant une intensité d'un courant électrique qui circule à travers l'élément lumineux (14) respectif,
- la valeur maximale (20) de la grandeur de fonctionnement (22) des éléments lumineux (14) étant plus élevée dans une zone associée à une direction d'émission principale du phare (12) que dans une zone de bord (34) du phare (12),
- les valeurs maximales (20) le long de la direction d'extension (16) du phare (12) suivant une distribution prédéfinie, ladite distribution étant réglable.

2. Véhicule à moteur (10) comportant un phare (12) selon l'une des revendications précédentes.

3. Véhicule à moteur (10) selon la revendication 2,
**caractérisé en ce que**
le véhicule à moteur (10) inclut un capteur ambiant et le dispositif de commande adapte la au moins une distribution de lumière si le capteur ambiant détecte un objet aux abords du véhicule à moteur (10).

4. Procédé pour faire fonctionner un phare (12) pour un véhicule à moteur (10), dans lequel le phare (12) comprend une pluralité d'éléments lumineux (14) qui sont disposés les uns à côté des autres le long d'une direction d'extension (16) du phare (12), et
- pour produire au moins une distribution de lumière avec le phare (12) en commandant la pluralité d'éléments lumineux (14), chacun des éléments lumineux (14) incluant une pluralité de diodes électroluminescentes qui peuvent être commandées avec le dispositif de commande de manière individuelle ou collective,
- différentes distributions de lumière de feux de route étant produites par la commande des éléments lumineux (14) sous la forme des différentes distributions de lumière,
**caractérisé en ce que** :
- une valeur maximale (20) d'une grandeur de fonctionnement (22) est prédéfinie pour chacun des éléments lumineux (14) en fonction de la position de l'élément lumineux (14) le long de la direction d'extension (16) du phare (12) et indépendamment de la au moins une distribution de lumière, la grandeur de fonctionnement (22) étant une intensité d'un courant électrique qui circule à travers l'élément lumineux (14) respectif, la valeur maximale (20) respective n'étant pas dépassée pour différentes distributions de lumière qui sont produites avec les éléments lumineux (14) individuels,
- chacun des éléments lumineux (14) fonctionnant au maximum en produisant au moins une distribution de lumière avec la valeur maximale (20) de la grandeur de fonctionnement (22), les valeurs maximales (20) de la grandeur de fonctionnement (22) des éléments lumineux (14) étant plus élevées dans une zone associée à une direction d'émission principale du phare (12) que dans une zone de bord (34) du phare (12) et
- les valeurs maximales (20) le long de la direction d'extension (16) du phare (12) suivant une distribution prédéfinie, ladite distribution étant réglable.
